(19) Europäisches Patentamt
European Patent Office
Office européen des brevets

(11) **EP 2 239 462 A1**

(12) **EUROPEAN PATENT APPLICATION**

(43) Date of publication:
**13.10.2010 Bulletin 2010/41**

(51) Int Cl.:
***F03D 11/00*** *(2006.01)* ***G01B 11/16*** *(2006.01)*

(21) Application number: **09005127.7**

(22) Date of filing: **07.04.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS** | (71) Applicant: **Siemens Aktiengesellschaft**<br>**80333 München (DE)**<br><br>(72) Inventor: **Stiesdal, Henrik**<br>**5000 Odense C (DK)** |

(54) **Method and arrangement to measure the deflection of a wind-turbine blade**

(57)     The invention relates to a method and arrangement to measure the deflection of a blade of a wind-turbine. The blade comprises a cavity inside the blade. A reflector, which is located inside the cavity of the blade, is coupled by a wireless signal with a distance-measurement-device. The distance-measurement-device uses the wireless signal to measure the distance between the distance-measurement-device and the reflector. A line of sight is established and maintained between the distance-measurement-device and the reflector even when the blade is deflected. The reflector is inclined relative to the line of sight in a way, that a lateral movement of the reflector relative to the line of sight results in a change of the distance between the distance-measurement-device and the reflector, while the lateral movement is caused by an deflection of the blade. The distance-measurement-device is designed to measure the change of the distance, which is used to determine the deflection of the blade.

FIG 1

**Description**

The invention relates to a method and arrangement to measure the deflection of a blade of a wind-turbine.

A wind turbine blade is exposed to varying loads as a result of a combination of forces caused by fluctuating wind flow, and inertial forces. Because of these loads the blade is deflected in both in-plane and out-of-plane directions. If the deflection of the blade exceeds certain limits then cracks or other damages of the blade may occur. At large deflections the blade may even hit the wind turbine tower.

It is known to control the pitch setting of the blade and/or the rotational speed of the wind turbine rotor to prevent damages or excessive loads of the blade, and also of the turbine. Such adaptive, load-reducing control requires input regarding the actual wind turbine loading, or alternatively of the blade deflection. The blade deflection may for such purposes be used directly for assessment of the risk of tower strike, or indirectly as a means of assessment of the blade loads.

It is known from US 6,619,918 and 6,940,186 to monitor mechanical loads of the blade by means of one or more strain-gauges positioned on the blade in certain positions.

It is also known from US 6,361,275 to include monitoring of the loads on the hub and/or on the main shaft as input for the adaptive regulation.

These and other similar monitoring methods using strain gauges all share a number of problems relating to the strain gauge technology. In many cases metallic strain gauges have lower fatigue resistance in relation to strain levels than the components such as rotor blades on which they are mounted. Their coil-like pattern may under certain circumstances make them act like antennas, capable of picking up electronic noise which is disturbing to the accurate assessment of loads.

Their coil-like pattern may also under certain circumstances give rise to high voltages if lightning current is passing nearby, e.g. in case of a lightning strike to a blade where the lightning current is discharged to earth through a series of down-conductors.

Finally, strain gauge technology generally requires accurate, permanent electrical termination, since the readings are strongly influenced by even small changes in conductivity of terminations.

For all these reasons it is generally difficult to justify an assumption that a strain-gauge based system for load monitoring can form a stable and consistent base for adaptive regulation during the 20+ year lifetime of a modern wind turbine.

Various attempts have been made to overcome the problems of conventional strain gauge technology for continuous load and/or deflection monitoring of wind turbine blades.

US 7,059,822 discloses a method for the assessment of blade deflection by means of a proxy measurement of the deflection of a beam mounted in the blade. This method does not provide any clear benefit with regards to physical stability for prolonged periods.

US 7,246,991 discloses a method where a sensor is used to determine the physical clearance between the blade and the tower. In a preferred embodiment this sensor comprises a fixed sensor element placed on the tower. The disadvantages of this approach are obvious - because the turbine needs to be able to yaw, it is necessary that the tower sensor forms a circumferential arrangement around the tower, which is not attractive for reasons related to size and serviceability.

US 7,303,373 discloses a method where the stresses and loads of the wind turbine blade are measured by means of optical fibers located inside the blade. The fiber is used to transmit an optical signal. If the blade is bended, the optical fiber and its characteristics are affected by the deflection, leading to a change of the optical signal to be used for monitoring.

This approach has the major disadvantage that the optical fibers need to be mounted in the blade over large radial distances, preferably during manufacturing. Irrespective of whether the optical fibers are mounted during manufacturing or as a separate process, this arrangement suffers from some of the same problems as conventional metallic strain gauges.

In many cases optical fibers have lower fatigue resistance in relation to strain levels than the components such as rotor blades on which they are mounted. Optical fiber technology generally requires accurate, permanent optical termination, since the readings are strongly influenced by even small changes in optical conductivity of terminations. For all these reasons it is generally difficult to justify an assumption that an optical fiber based system for load monitoring can form a stable and consistent base for adaptive regulation during the 20+ year lifetime of a modern wind turbine.

It is therefore the aim of the invention to provide an improved method and arrangement to monitor the deflection of a blade.

This problem is solved by the features of claim 1 and of claim 14. Preferred embodiments of the invention are subject of the dependent claims.

According to the invention the deflection of a blade is monitored or measured. The blade comprises a cavity inside the blade. A reflector, which is located inside the cavity of the blade, is coupled by a wireless signal with a distance-measurement-device. The distance-measurement-device uses the wireless signal to measure the distance between the distance-measurement-device and the reflector. A line of sight is established and maintained between the distance-measurement-device and the reflector even when the blade is deflected. The reflector is inclined relative to the line of sight in a way, that a lateral movement of the reflector relative to the line of sight results in a change of the distance between the distance-measurement-device and the reflector, while the lateral movement is caused by an deflection of the blade. The distance-measurement-device is designed to measure the change of the distance, which is used to determine the deflection of the blade.

Because of the invention there is no need for sensitive electronics and optical fibers to be installed out in the blade.

The presented invention is very robust to changes of the temperature.

It is also advantageous in view of the service - the used components are located inside the blade and/or the hub, so they environmental impacts are reduced.

The used components can be replaced easily because of their location.

It is even possible to refit existing wind-turbines with the inventive arrangement.

The distance-measurement-system uses a wireless signal and a reflector, while the reflector is located inside the cavity of the blade.

It is possible to locate transmitting/receiving components of the distance-measurement-system inside the hub, which supports the blade, or even inside the cavity.

In a preferred embodiment the transmitting/receiving components of the distance-measurement-system are located inside the blade itself, preferably as close to the hub as possible. This allows to avoid the use of cables and electronics outside the blade, so the maintenance-work is simplified.

The reflector is located at a different position inside the cavity, in regard to the transmitting/receiving components of the distance-measurement-system.

A line of sight between the transmitting/receiving components and the reflector is maintained during all normal modes of deflection of the blade.

The reflector comprises a reflecting-area which is inclined relative to the line of sight. The inclination relative to the line of sight is selected in a way, that on the one hand a variation of the distance between the transmitting/receiving-devices of the distance-measurement-system and the reflector is allowed as a function of the blade deflection. On the other hand it is ensured that the reflector is always in the line of sight at all normal modes of deflection of the blade.

In a preferred embodiment the reflector is sufficiently large. Preferably it reaches from a first inside-surface of the blade structure to a second inside-surface of the blade structure, which is opposite to the first inside surface.

The distance between the reflector and the transmitting/receiving-devices is chosen in a way, that the line of sight stays free in regard to any other inside-surfaces, so the transmission of the wireless signal will be kept during all normal modes of the blade-operation.

This allows a maximum transversal movement of the reflector relative to the line of sight, while still maintaining the presence of the reflector in the line of sight at such deflection that may occur during all normal modes of operation. This allows a maximum accuracy of the detection of distance-variations and thereby of the deflection.

In an embodiment of the invention the reflector is mounted according to the blade structure - it may be mounted at a shear web or at an inner wall of the blade. It may be even an integrated part of the blade-structure.

In a preferred embodiment the distance-measurement-system uses an optical transmitter, e.g. a laser, which transmits an optical signal to the reflector as described above.

The reflector reflects the optical signal back to an optical receiver, which is combined with or located nearby the optical transmitter. In a preferred embodiment the transmitter and the receiver are combined to a single transmitting/receiving-device.

In another preferred embodiment the distance-measurement-system uses an ultrasonic transmitter, e.g. a sonar, which transmits a sonar-signal to the reflector as described above. The reflector reflects the sonic-signal back to a sonic receiver, which is combined with or located nearby the ultrasonic transmitter. In a preferred embodiment the transmitter and the receiver are even combined to a single transmitting/receiving-device.

It is also possible to use any other kind of wireless signals for the distance-measurement.

In a preferred embodiment the reflection area is inclined for measuring the deflection of the blade in a flapwise or edge-wise direction. The deflection of the blade results in a change of the distance between the transmitting/receiving-device and the reflector.

The difference in the signal path is hereby in proportion to the deflection of the wind turbine blade, and it is hereby possible to derive a degree of the blade deflection in the direction of interest and use the result for estimating the loads experienced by the blade and the wind turbine.

It is also possible to measure the edgewise and the flapwise deflection at the same time. In a preferred embodiment a combination of two distance-measurement-systems are used.

A first distance-measurement-system is used to detect distance-changes to a first reflection-area, where the distance-changes are related to a first deflection-direction. A second distance-measurement-system is used to detect distance-changes to a second reflection-area, where the distance-changes are related to a second deflection-direction. With this it is possible to measure the deflection of the blade in two directions - the flapwise and the edge-wise direction.

In a further embodiment both systems uses the same reflection-area for this purpose.

In a preferred embodiment the reflection area is arranged in a way, that the distance to the distance-measurement-system changes as a function of the blade deformation in one direction. The reflection area is also designed to change the character of the reflected signal (for example of an electromagnetic-signal) as a function of the blade deformation in the other direction.

For example, when using light the reflector area may be made as a grey scale with a gradient perpendicular to the direction of distance change. Thereby the intensity of the reflected light is changed depending on the blade deformation in the direction where the distance between the distance-measurement-system and the reflector does not change materially. Other changes of character of the reflected signal are possible.

In a preferred embodiment the distance measurement system is based on one of the following distance measurement principles such as triangulation, time-of-flight measurement, pulse-type time-of-flight systems, modulated beam systems, interferometery, or other distance measurement principles.

In a preferred embodiment the reflection area is designed with a surface or a coating, so a diffusing reflector is achieved. This means that the incident beam or signal is reflected in substantially all directions.

This allows that it is not necessary to maintain a direct line between the reflector and the receiver during operation.

In another embodiment of the invention the reflection area comprises a direct reflector, such as a mirror or a blank reflective surface. The reflected beam or signal substantially obeys the law of reflection, so the angle of reflection is equal to the angle of incidence.

Other types of reflectors or coatings might be used as well.

In a preferred embodiment a self calibration of the whole system is introduced.

The calibration could be done whenever the wind-turbine is paused and the blade is in a steady state position in such a way that the blade is not deflected in the distance of interest.

The blade is preferably positioned towards the ground during the calibration in order to avoid deflection of the blade caused by the gravity.

The wind speed could also be taking into account during the calibration process in order to prevent that the blade is deflected due to wind.

A detected first distance between the transmit/receive-components of the distance-measurement-system and the reflecting-area is used as a reference-value or for resetting the distance measurements in the direction of interest during the calibration process.

The calibration is done advantageously, when the wind-turbine is paused - for instance during a scheduled pause such as a "self lubrication sequence". In this case the blade bearings of the wind-turbine are lubricated by pitching the blades from one extremity to the other.

The invention allows the change of used components very easily, as the components are located in the hub and/or inside the cavity of the blade. This allows them to be changed by the service staff, while they are doing their regular maintenance work on the wind turbine.

The system itself is very robust due to the used components, which are only connected wireless. This means that no wires in the blade are needed in order to measure the deflection of the blade.

This is a great advantage since no transducer or active components need to be installed on the outer blade-surface, where it is difficult to get access during service or repair work.

Furthermore, no sensitive electrical components are installed on the outer surface of the blade, where mechanical vibrations and temperature changes are causing failure and drift of the components.

The invention also allows the control of the wind-turbine in respect to the acting loads, experienced by the blades and thus the rest of the structural system of the wind turbine.

In a preferred embodiment the determined deflection is used to adjust the pitch angle, the generator speed, etc., in order to reduce the loads.

Non-uniform loads acting on the rotor causes the deflection of the blades to vary in a cyclic manner. Non-Uniform loads can hereby be measured very easily using the distance measurement system.

Furthermore, the measurement of the blade deflection can be used to generate a cyclic pitch offset for each blade as a function of the deflection of the blades. So it is possible to adjust the pitch angle of the blades in a cyclic manner in order to reduce or to counteract the non-uniform loads caused by wind shear, wake, etc. So the lifetime of the turbine is increased.

The invention allows the detection of wind shear that is experienced by the wind turbine, such as "low level jets". These jets are of a great concern especially for tall wind-turbines. Low level jet streams are characterized by a rapid increase of wind-speed with height. So low level jets cause very high loads on the turbine and should be avoided in order to keep the operation of the turbine within designed limits. Low level jets are not causing significant mechanical vibration on the turbines, and so far it was impossible to detect them by the use of an accelerometer, ..., etc.

Now the present invention allows to detect the low level jets by the evaluation of the deflection-difference of the blade at different rotor positions.

So the blade measurement can be used to control the operation of the wind-turbine to reduce the excessive loads that are caused by the low level jets or other types of wind shear.

Furthermore, the invention allows the improvement of the yaw control as a yaw error can be detected easily and effectively by the difference in the blade deflection between left and right blade position.

This way, the deflection of the blades can be used for estimating the direction of the wind, and hereby to control the yawing of the turbine in order to maintain the turbine in upwind direction during operation.

This is a great improvement compared to yaw controls that are based on point-measurements behind the rotor which measurements are heavily polluted by the rotor.

The invention allows the measurement and the detection of blade vibrations such as edge wise and/or flap wise vibrations of the blade. It is hereby possible to use the measurements of the blade vibrations for controlling the turbine in order to reduce the vibration and to stay within design limits. The measurement of the vibrations can be used to adjust the blade-angle, rotor speed, the yaw etc. in order to reduce the blade vibrations. The time resolution of the measurement should be fast enough for analyzing the frequency contents of the distance measurement signal.

The distance measurement system can be arranged for continuous or discrete measurements.

In one embodiment of the invention a single distance measurement system is arranged in the wind turbine for measurement of the deflection of a single blade. In many cases a single distant measurement system might be enough.

However, a distance measurement system for each blade can be installed for more thorough information about deflections and vibrations of the blades. Redundancy is also achieved when a distance measurement system for each blade is used and the operation and safety of the wind turbine is maintained even if one distance measurement systems is failing.

In a further embodiment of the invention the distance measurement system is used in combination with the method described in filing-no: EP 08104876.1.

This application describes a method for determining fatigue load of a wind turbine and for fatigue load control. This way, the distance measurement system is used as a sensor unit and a measurement value of the distance measurement system is used for calculation of the fatigue load of a wind turbine.

In one embodiment of the invention the measurement value such as deflection and/or vibration of the blade is used to control turbine operation as a function of a fatigue ratio.

A fatigue ratio for a given component is calculated as the cumulative fatigue damage incurred by the component multiplied with the design life of the component and divided by the product of the total calculated fatigue damage to be incurred by the component during the design life of the component multiplied with the cumulative operating time of the component:

$$F_T = \frac{D_T \cdot L_0}{D_0 \cdot L_T}$$

where:

FT    is the fatigue ratio at time T
DT    is the cumulative fatigue damage incurred by the component at time T
L0    is the design life of the component
D0    is the design fatigue damage for the component
LT    is the operating time of the component at time T

According to the invention the turbine can be operated as a function of the fatigue ratio. If the fatigue ratio at a given point in time is lower than unity then turbine operation may continue without limitation, but if the fatigue ratio is exceeding unity then turbine operation will be curtailed until the fatigue ratio is again unity or lower. This way, the present system thus allows adapting wind turbine behavior to the fatigue load and fatiguing damage that has occurred to the wind turbine for the time period of its operation, and thus enables to reduce safety and stability overheads in the structural design of wind turbines

The invention can be used as part of an overall control- and/or security-system to prevent the blades from hitting the tower of the wind-turbine.

The invention is described now in more detail by help of a figure.

FIG 1    shows the inventive arrangement with a first situation of the blade, when the blade is not bent,
FIG 2    shows the inventive arrangement with a second situation of the blade, when the blade is bent by the wind,
FIG 3    shows the inventive arrangement, which is used to meas- ure the deflection of a blade in two directions, and
FIG 4    shows the reflector-arrangement according to the inven- tion to detect edge wise and/or flap wise vibrations.

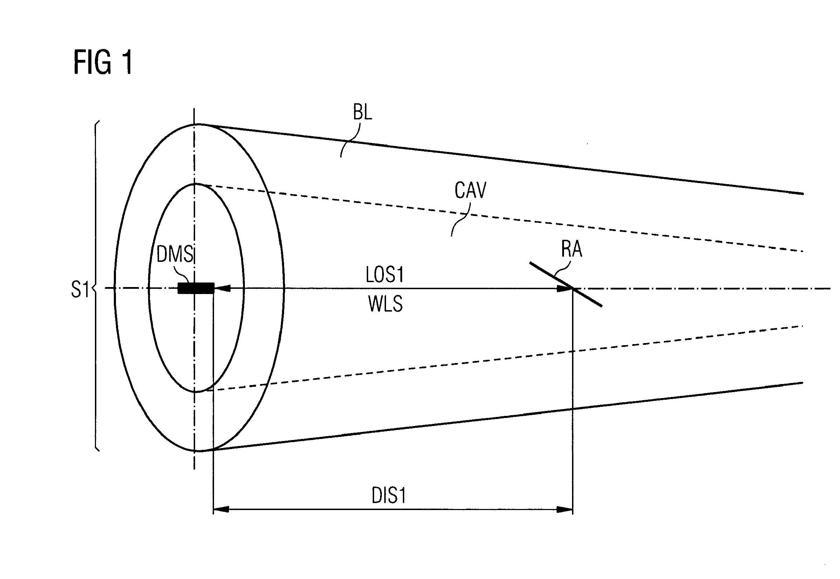

FIG 1 shows the inventive arrangement with a first situation of a blade BL, when the blade BL is not bent.

In this case it is assumed that the blade BL is directed vertically to the ground. If also no wind acts on the blade BL it will be not bent.

The blade BL is connected on a first side S1 with a hub (not shown here) of a wind-turbine.

Asides the hub or (as shown here) at the beginning of a cavity CAV of the blade BL there is a distance-measurement-system DMS, which is used to detect distance-changes between the distance-measurement-system DMS and a reflection-area RA of a reflector.

The reflection-area RA is located inside the cavity CAV of the blade BL. The reflection-area RA shows an inclination towards a line of sight, which is between the distance-measurement-system DMS and the reflection-area RA.

The position of the reflection-area RA inside the cavity CAV is chosen in a way that the line of sight is maintained even when the blade is bent by the wind as described later.

A wireless-signal WLS, which is used by the distance measurement system DMS for the distance-measurement, is sent to the reflector-area RA, is reflected there and is received by the distance-measurement-system DMS. This happens along a first line of sight LOS1. The distance-measurement results in a first distance DIS1.

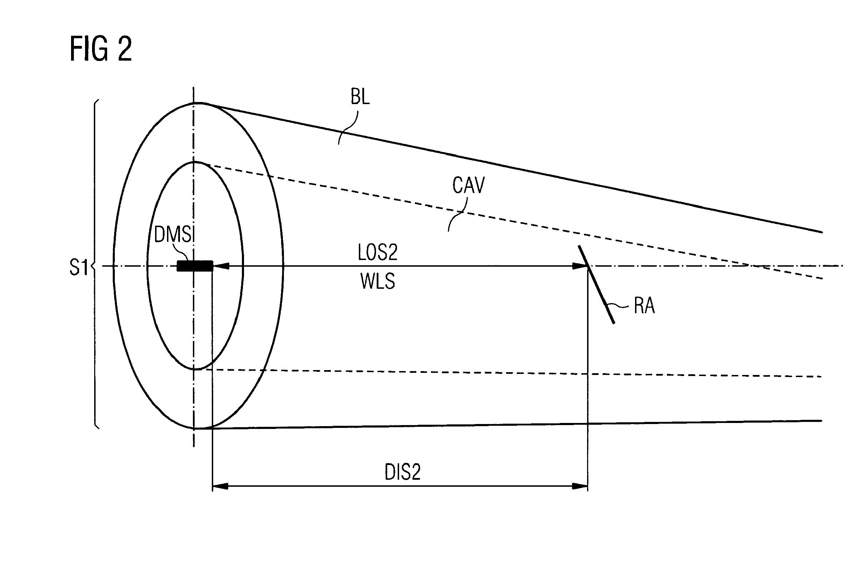

FIG 2 shows the inventive arrangement with a second situation of the blade BL, when the blade BL is bent.

In this case it is assumed that the blade BL is rotated upwards and might be bent by the gravity and/or by the wind, too.

Because of the deflection of the blade BL the inclined reflecting-area RA will be moved relatively to the former line of sight LOS1.

So the distance between the reflecting-area and the transmitting/receiving-devices of the distance-measurement-system will be varied in dependency to the deflection of the blade.

Another wireless-signal WLS is sent to the reflector-area RA, is reflected there and is received by the distance-measurement-system DMS. This happens along a second line of sight LOS2, which is in this example longer than the first line of sight LOS1. This distance-measurement results in a second distance DIS2.

The change between the first distance DIS1 and the second distance DIS2 is related to the deflection of the blade BL.

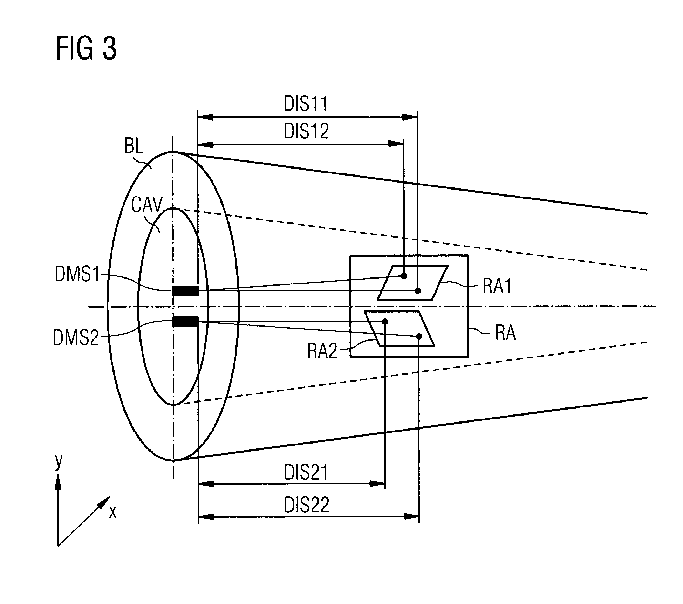

FIG 3 shows the inventive arrangement, which is used to measure the deflection of a blade BL in two directions x and y.

This arrangement is used to measure an edge-wise and/or a flapwise deflection. In this case a combination of two distance-measurement-systems DMS1, DMS2 is used.

A first distance-measurement-system DMS1 is used to detect distance-changes to a first reflection-area RA1, while the distance-changes are related to a first deflection of the blade BL in x-direction.

A second distance-measurement-system DMS2 is used to detect distance-changes to a second reflection-area RA2, while the distance-changes are related to a second deflection of the blade BL in y-direction.

In a preferred embodiment both systems use a combined reflection-area RA for this purpose.

For the first distance-measurement-system DMS1 a first distance DIS11 is shown, which is related to the not bent blade BL, while a second distance DIS12 is shown, which is related to the bent blade BL.

For the second distance-measurement-system DMS2 a first distance DIS21 is shown, which is related to the not bent blade BL, while a second distance DIS22 is shown, which is related to the bent blade BL.

By the evaluation of the differences of the distances DIS12-DIS11 and of DIS22-DIS21 the deflection of the blade BL in x-direction and in y-direction can be measured.

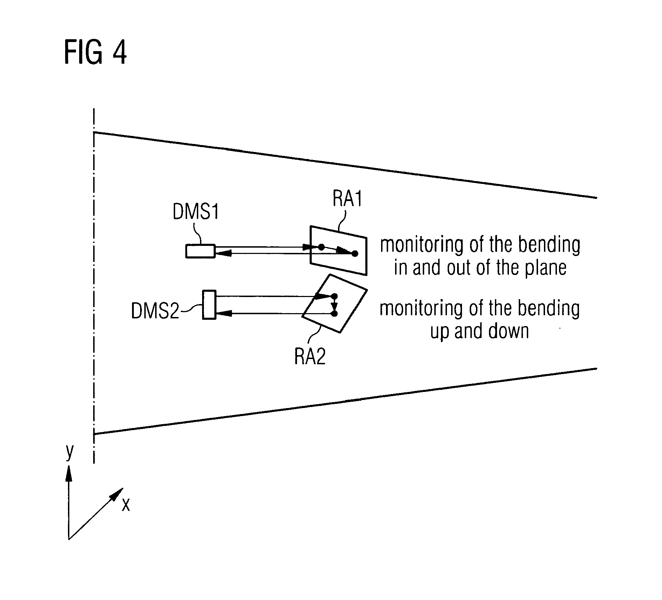

FIG 4 shows the reflector-arrangement according to the invention to detect edge wise and/or flap wise vibrations.

## Claims

1. Arrangement to measure the deflection of a blade of a wind-turbine,

   - where the blade comprises a cavity inside the blade,
   - where a reflector, which is located inside the cavity of the blade, is coupled by a wireless signal with a distance-measurement-device, while the distance-measurement-device uses the wireless signal to measure the distance between the distance-measurement-device and the reflector,
   - where a line of sight is established and maintained between the distance-measurement-device and the reflector even when the blade is deflected,
   - where the reflector is inclined relative to the line of sight in a way, that a lateral movement of the reflector relative to the line of sight results in a change of the distance between the distance-measurement-device and the reflector, while the lateral movement is caused by an deflection of the blade, and
   - where the distance-measurement-device is designed to measure the change of the distance, which is used to determine the deflection of the blade.

2. Arrangement according to claim 1,

   - where the distance-measurement-device is designed to send the wireless signal along the line-of-sight to the reflector,
   - where a first point-of-reflection, located on the reflector, is defined by the wireless signal, sent along the line of sight, and
   - where a second point-of-reflection, located on the reflector, is defined by the wireless signal, sent along the line of sight after or when the blade is deflected.

3. Arrangement according to claim 1 or 2,

   - where the distance-measurement-device is located inside the cavity of the blade, or
   - where the distance-measurement-device is located inside a hub, which is connected with the blade.

4. Arrangement according to one of the claims 1 to 3,

   - where a first deflection of the blade, which is related to a first distance between the distance-measurement-device and the reflector, results in a first reflection-point of the wireless signal at the reflector,

- where a second deflection of the blade, which is related to a second distance between the distance-measurement-device and the reflector, results in a second reflection-point of the wireless signal at the reflector,

- where the distance-measurement-device is designed to determine the difference between the first and the second distance to determine the distance-change, or

- where the distance-measurement-device is designed to determine the difference between the first and the second reflection point to determine the distance-change.

5. Arrangement according to one of the claims 1 to 4,

- where the reflector is located at a shear-web of the blade, and/or

- where the reflector is located close to the tip-end of the blade.

6. Arrangement according to one of the claims 1 to 5, where the distance-measurement-device is developed to use

- an optical-signal, or
- a sonar-signal, or
- a light-signal, or
- a laser-signal, or
- an electromagnetic-signal

for the distance-measurement.

7. Arrangement according claim 6, where the reflector is arranged to change the character of the reflected electromagnetic-signal as a function of the deformation of the blade.

8. Arrangement according claim 6, where an area of the reflector is made as a grey scale with a gradient perpendicular to the direction of the distance-change, thereby changing the intensity of the reflected light depending on the blade deformation in the direction, where the distance between the distance-measurement-device and the reflector does not change materially.

9. Arrangement according to one of the claims 1 to 8,

- where a first and a second reflector are located inside the cavity, each comprising a reflecting-area, which are inclined relative to the line of sight for the reflection of a wireless signal,

- where the distance-measurement-device comprises a first transmitting-device and a first receiving-device, which are used to measure changes of the distance to the reflecting-area of the first reflector, while the distance-change is related to a first deflection-direction of the blade,

- where the distance-measurement-device comprises a second transmitting-device and a second receiving-device, which are used to measure changes of the distance to the reflecting-area of the second reflector, while the distance-change is related to a second deflection-direction of the blade.

10. Arrangement according to 9, where the reflecting-areas are combined to a common reflecting-area.

11. Arrangement according to one of the claims 1 to 10, where at least one distance-measurement-device is aligned to a reflecting-area of the reflector for the determination of an edgewise and/or a flapwise deflection of the blade.

12. Arrangement according to one of the claims 1 to 11, where the reflection-area is formed and arranged in a way, that the distance is changed as a function of a blade-deformation in one direction, and that a character of the reflected wireless signal is changed as a function of the blade-deformation in another direction.

13. Arrangement according to one of the claims 1 to 12, where the distance-measurement-system is connected to a controller of a wind turbine, while the controller is configured to keep the operation of the wind turbine within predefined limits and/or which is configured to reduce loads acting on the wind turbine.

14. Method to measure the deflection of a blade of a wind-turbine,

- where a distance is measured by a wireless signal between a distance-measurement-device and a reflector, while the reflector is located inside a cavity of the blade,

- where a line of sight is established and maintained between the distance-measurement-device and the reflector even when the blade is deflected,

- where the wireless signal is sent from the distance-measurement-device to the reflector, is reflected there and is received by the distance-measurement-device, while the reflector is inclined relative to the line of sight in a way, that a lateral movement of the reflector relative to the line of sight results in a change of the distance between the distance-measurement-device and the reflector, while the lateral movement is caused by an deflection of the blade, and

- where the deflection of the blade is determined by the measurement of the change of the distance.

**15.** Method according to claim 14,

- where a first and a second reflector are used inside the cavity for the reflection of a first and a second wireless signal,
- where the distance-measurement-device uses a first transmitting-device and a first receiving-device to measure changes of the distance to a reflecting-area of the first reflector, while the distance-change is related to a first deflection-direction of the blade,
- where the distance-measurement-device uses a second transmitting-device and a second receiving-device to measure changes of the distance to a reflecting-area of the second reflector, while the distance-change is related to a second deflection-direction of the blade.

**16.** Method according to claim 14 or 15, where transmitting/receiving-devices of the distance-measurement-device are aligned to reflecting-areas of the reflector for the determination of an edge-wise and/or a flap-wise deflection of the blade.

**17.** Method according to one of the claims 14 to 16,

- where a calibration of the distance-measurement-device is done when the wind-turbine is paused and the blade is positioned towards the ground, or
- where a calibration of the distance-measurement-device is done during a self lubrication of bearings of the wind-turbine.

**18.** Method according to one of the claims 14 to 17, where the measured deflection of the blade is used as an additional value to control the pitch of the blade and/or to control the yaw of the nacelle of the wind-turbine.

**19.** Method according to one of the claims 14 to 18,

- where the distance-measurement-device is used for measuring deflection and/or of a vibration of at least one blade,
- where a fatigue load value is calculated based on the deflection and/or the vibration of the at least one blade,
- where the fatigue load is used to control the operation of the wind-turbine as a function of the fatigue load.

FIG 1

EP 2 239 462 A1

FIG 2

FIG 3

# FIG 4

DMS1

RA1

monitoring of the bending
in and out of the plane

DMS2

monitoring of the bending
up and down

RA2

y

x

Europäisches
Patentamt

European
Patent Office

Office européen
des brevets

**EUROPEAN SEARCH REPORT**

Application Number

EP 09 00 5127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/123510 A (UNIV KYOTO [JP]; SOOKI CO LTD [JP]; OSHIMA YOSHINOBU [JP]; HASEGAWA SH) 16 October 2008 (2008-10-16)<br>* figure 7 *<br>* abstract * | 1-7,9, 11-13 | INV.<br>F03D11/00<br>G01B11/16 |
| X | WO 2007/082635 A (SIEMENS AG [DE]; BOSSELMANN THOMAS [DE])<br>26 July 2007 (2007-07-26)<br>* figure 3 *<br>* claim 1 * | 1-7,9, 11-17 | |
| X,E | WO 2009/068437 A (LUCKS CHRISTOPH [DE])<br>4 June 2009 (2009-06-04)<br><br>* abstract *<br>* figure 2 *<br>* figure 3 * | 1-7, 9-11, 13-19 | |
| X | US 4 687 325 A (CORBY JR NELSON R [US])<br>18 August 1987 (1987-08-18)<br>* abstract *<br>* figure 8 * | 8 | TECHNICAL FIELDS SEARCHED (IPC) |
| D,A | US 2006/000269 A1 (LEMIEUX DAVID L [US] ET AL LEMIEUX DAVID LAWRENCE [US] ET AL)<br>5 January 2006 (2006-01-05)<br>* figure 5 *<br>* paragraph [0016] *<br>* paragraph [0017] *<br>* paragraph [0025] * | 1,4,18, 19 | F03D<br>G01B |
| A | US 2004/174542 A1 (HANDMAN DANIEL F [US] ET AL) 9 September 2004 (2004-09-09)<br>* figure 2 *<br>* abstract * | 1,14 | |

The present search report has been drawn up for all claims

| Place of search | Date of completion of the search | Examiner |
|---|---|---|
| The Hague | 14 December 2009 | Burattini, Paolo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 00 5127

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2009

| Patent document cited in search report | | Publication date | Patent family member(s) | Publication date |
|---|---|---|---|---|
| WO 2008123510 | A | 16-10-2008 | NONE | |
| WO 2007082635 | A | 26-07-2007 | DE 102006002708 A1 | 26-07-2007 |
| WO 2009068437 | A | 04-06-2009 | DE 102007059165 A1 | 28-05-2009 |
| US 4687325 | A | 18-08-1987 | NONE | |
| US 2006000269 | A1 | 05-01-2006 | NONE | |
| US 2004174542 | A1 | 09-09-2004 | WO 2004088285 A2 | 14-10-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6619918 B
- US 6940186 B
- US 6361275 B
- US 7059822 B
- US 7246991 B
- US 7303373 B
- EP 08104876 A